# EUROPEAN PATENT APPLICATION

(11) **EP 1 749 797 A1**
(43) Date of publication of application: **07.02.2007**
(21) Application number: 05738760.7
(22) Date of filing: 12.05.2005
(51) Int. Cl.: C01B 33/107

(54) **METHOD FOR PRODUCING HALOSILANE AND METHOD FOR PURIFYING SOLID COMPONENT**

(30) Priority: 19.05.2004 JP 2004149471
(71) Applicant: SHARP KABUSHIKI KAISHA, Osaka-shi, Osaka 545-8522 (JP)
(72) Inventor: KAJIMOTO, Kimihiko, 6340078 (JP); OBA, Tomoyuki, 8670053 (JP); HIRAKAWA, Hiroyuki, 8670053 (JP)
(74) Representative: Müller, Frithjof E.
(86) International application number: PCT/JP2005/008719
(87) International publication number: WO 2005/110918

(57) **Abstract**

A method of producing halosilane of the present invention includes the steps of (1) subjecting used slurry 1 to a primary centrifugal separation to recover a solid fraction 3b predominantly composed of abrasive grains, the used slurry comprising slurry and silicon particles mixed in the slurry, the slurry comprising the abrasive grains and a water-soluble dispersion medium for dispersing the abrasive grains therein, (2) subjecting a liquid fraction 3a obtained by the primary centrifugal separation to a secondary centrifugal separation to separate into a liquid fraction 5a predominantly composed of the dispersion medium and remaining sludge 5b, (3) distilling the liquid fraction 5a obtained by the secondary centrifugal separation to obtain a solid fraction 7b, followed by performing crushing and organic residue removal with regards to the solid fraction 7b, and (4) reacting the resultant solid fraction with a halogenating agent, and rectifying a product obtained by the reaction to recover halosilane.

## Description

### TECHNICAL FIELD

The present invention relates to a method of recovering silicon contained in the used slurry efficiently, and so on.

### BACKGROUND ART

As a method of recovering silicon (Si) from used slurry, there is a conventional process in which slurry is treated using hydrogen fluoride (HF) or inorganic acid and then is subjected to a filtration step and a drying step and the dried substance is crushed and classified to obtain silicon (See e.g. Japanese Unexamined Patent Publication No.2001-278612).

### DISCLOSURE OF THE INVENTION

### Problems to be Solved by the Invention

However, the prior art requires large-scale facilities and lots of labors because the prior art includes many steps. Particularly, when a mineral oil is used for the slurry, an organic solvent or the like is required and it takes extremely much cost to install safety facilities and take environmental measures for the organic solvent. And, since the prior art requires a filtration apparatus, cost of a filter also causes increases in cost.

The present invention was made in view of the above circumstances and it is an object of the present invention to provide a method of recovering silicon contained in the used slurry efficiently as halosilane.

### Means for Solving the Problems

A method of producing halosilane in accordance with the present invention comprises the steps of (1) subjecting used slurry to a primary centrifugal separation to recover a solid fraction predominantly composed of abrasive grains, the used slurry comprising slurry and silicon particles mixed in the slurry, the slurry comprising the abrasive grains and a water-soluble dispersion medium for dispersing the abrasive grains therein, (2) subjecting a liquid fraction obtained by the primary centrifugal separation to a secondary centrifugal separation to separate into a liquid fraction predominantly composed of the dispersion medium and remaining sludge, (3) distilling the liquid fraction obtained by the secondary centrifugal separation to obtain a solid fraction, followed by performing crushing and organic residue removal with regards to the solid fraction, and (4) reacting the resultant solid fraction with a halogenating agent, and rectifying a product obtained by the reaction to recover halosilane.

### Effect of the Invention

In the present invention, the solid fraction obtained by distilling the liquid fraction obtained by the secondary centrifugal separation is subjected to the removal of the organic residue as well as being crushed minutely. Therefore, the organic residue can be effectively removed. If a solid fraction in which the organic residue still remains is reacted with a halogenating agent, organic halide is produced and the degree of purity of halosilane (halogenated silane) is decreased, but in the present invention, since a solid fraction from which the organic residue has been removed is reacted with a halogenating agent, an amount of organic halide to be produced is small and halosilane of high purity can be obtained. And, in accordance with the present invention, halogenation proceeds quickly because the solid fraction obtained by distillation is reacted with a halogenating agent after being crushed.

The method of the present invention can be performed with less process steps and more simple facilities than conventional methods. Therefore, in accordance with the present invention, silicon contained in the used slurry can be efficiently recovered as halosilane.
And, it becomes possible to reduce an amount of waste and the cost of slicing can be reduced. And, it is also possible to produce silicon (Si) of high purity from halosilane by a Siemens process or a zinc reduction method. Thus, recycling of Si is made possible from now on.

### BRIEF DESCRIPTION OF THE DRAWING

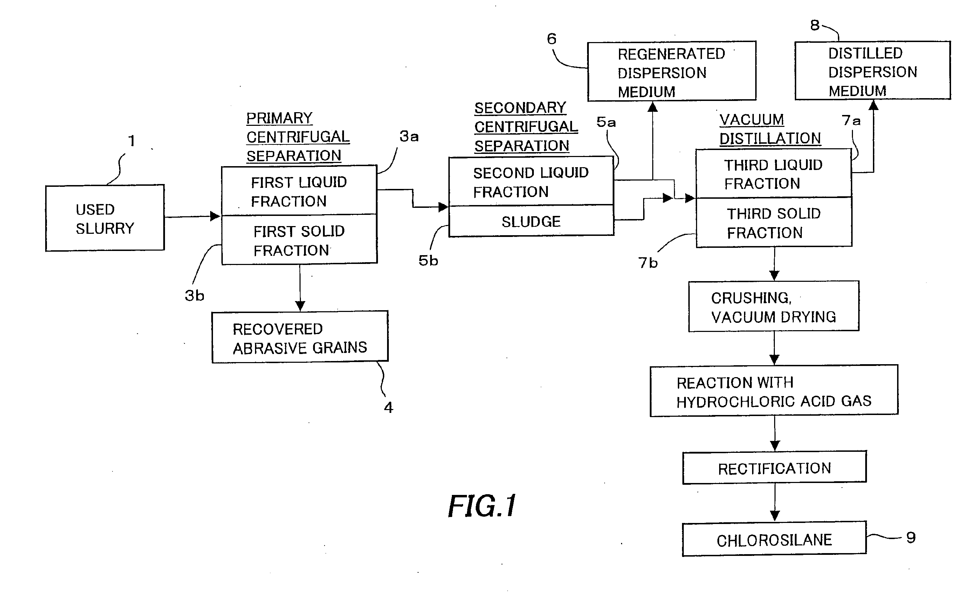

Figure 1 is a flow chart showing a method of producing chlorosilane according to Example 1 of the present invention.

### BEST EMBODIMENT FOR CARRYING OUT THE INVENTION

### 1. First embodiment

A method of producing halosilane according to the first embodiment of the present invention comprises the steps of (1) subjecting used slurry to a primary centrifugal separation to recover a solid fraction predominantly composed of abrasive grains, the used slurry comprising slurry and silicon particles mixed in the slurry, the slurry comprising the abrasive grains and a water-soluble dispersion medium for dispersing the abrasive grains therein, (2) subjecting a liquid fraction obtained by the primary centrifugal separation to a secondary centrifugal separation to separate into a liquid fraction predominantly composed of the dispersion medium and remaining sludge, (3) distilling the liquid fraction obtained by the secondary centrifugal separation to obtain a solid fraction, followed by performing crushing and organic residue removal with regards to the solid fraction, and (4) reacting the resultant solid fraction with a halogenating agent, and rectifying a product obtained by the reaction to recover halosilane.

### 1-1. Step of subjecting used slurry to a primary centrifugal separation to recover a solid fraction predominantly composed of abrasive grains, the used slurry comprising slurry and silicon particles mixed in the slurry, the slurry comprising the abrasive grains and a water-soluble dispersion medium for dispersing the abrasive grains therein

The abrasive grains are, for example, composed of silicon carbide (SiC), diamond, cubic boron nitride (CBN), alumina or the like. A water-soluble (water base) dispersion medium is, for example, composed of a water-soluble solvent (a water-soluble organic solvent) such as ethylene glycol, propylene glycol, polyethylene glycol or the like. And, the water-soluble dispersion medium may contain water in an amount of about 5 to 15%. When the water-soluble dispersion medium contains such water, it is possible to avoid this dispersion medium from becoming control subjects as a hazardous material under the Fire Defense Law. Further, generally, a dispersant (for example, bentonite) for dispersing the abrasive grains and Si slicing chippings in the dispersion medium are added in an amount several percentages to the dispersion medium. The silicon particles represents, for example, silicon slicing chippings produced when a silicon wafer is prepared by slicing a silicon ingot or silicon polishing chippings produced when a silicon wafer is lapped. When slurry is used for slicing of a silicon ingot to prepare silicon wafers, silicon particles such as silicon slicing chippings are mixed in the slurry. Such slurry with silicon particles mixed therein is an example of the used slurry. The primary centrifugal separation is preferably performed at centrifugal acceleration of 100 to 1000 G. By subjecting the used slurry to a primary centrifugal separation, the used slurry is separated into a first solid fraction and a first liquid fraction. The first solid fraction is predominantly composed of abrasive grains. Since the abrasive grains generally have a higher specific gravity than silicon particles, they sediments faster than the silicon particles. Therefore, if the used slurry is subjected to a low speed centrifugal separation, the abrasive grains are selectively sedimented. Since the first solid fraction includes abrasive grains abundantly, it can be used for regenerating the slurry. On the other hand, the first liquid fraction predominantly includes a dispersion medium and silicon particles.

### 1-2. Step of subjecting a liquid fraction obtained by the primary centrifugal separation to a secondary centrifugal separation to separate into a liquid fraction predominantly composed of the dispersion medium and remaining sludge

The secondary centrifugal separation is preferably performed at 2000 to 5000 G. When the liquid fraction is subjected to such a high-speed centrifugal separation, the solid fraction which has not been sedimented by the primary centrifugal separation also sediments. Sludge (second solid fraction) obtained in this step includes the silicon particles and abrasive grains not sedimented by the primary centrifugal separation. A liquid fraction (a second liquid fraction) predominantly composed of a dispersion medium also includes the abrasive grains and the silicon particles. The second liquid fraction is generally utilized for the regeneration of slurry, but when the entire second liquid fraction was used for the regeneration of slurry as-is, it is not preferred since a mass ratio of silicon in the regenerated slurry becomes too high. And so, it is preferred that at least a part of the second liquid fraction is distilled and a liquid fraction obtained by this distillation is recovered to be used for regenerating slurry.

### 1-3. Step of distilling the liquid fraction (second liquid fraction) obtained by the secondary centrifugal separation to obtain a solid fraction, followed by performing crushing and organic residue removal with regards to the solid fraction

"Distilling a liquid fraction (a second liquid fraction) obtained by the secondary centrifugal separation" includes the case of distilling a part of this liquid fraction. And, this distillation may include, for example, the case of distilling a mixed solution obtained by adding the sludge to a part of the second liquid fraction. In this case, silicon contained in the sludge can also be recovered. Distillation is preferably performed in a vacuum (about 20 torr or less) because there is a risk of firing during distillation if the liquid fraction is distilled in a normal pressure. Generally, a liquid fraction obtained by distillation substantially comprises only a dispersion medium. Accordingly, by using this liquid fraction for the regeneration of slurry, a mass ratio of silicon in the slurry to be regenerated can be decreased.

The solid fraction obtained by distillation is subjected to crushing and organic residue removal. The crushing is preferably performed using vibration vacuum crushing. And, the organic residue removal is preferably performed by vacuum drying. Generally, in the solid fraction obtained by distillation, particles having a particle diameter of about 1 to 10 mm exist abundantly. Generally, in such particles, a large amount of the organic substance (organic solvent) remains. If such particles are reacted with a halogenating agent in this state, organic halide is produced and the degree of purity of halosilane to be obtained is worsened. In the present embodiment, since such particles are reacted with a halogenating agent after they are crushed, an amount of organic halide to be produced is small and halosilane of high purity can be obtained. And, halogenation proceeds quickly because the particles are reacted with a halogenating agent after they are crushed.

It is preferred to perform this step using an apparatus in which vibration and heating in a vacuum can be carried out. When such apparatus is used, the solid fraction obtained by distillation can be vacuum-dried directly after vibration vacuum crushing. Therefore, the number of process steps can be reduced. And, the crushed solid fraction is active since silicon in the solid fraction is exposed at the surface of the crushed solid fraction and therefore it is preferred to avoid the contact with air (or oxygen), but when the above-mentioned apparatus is employed, the contact with air (or oxygen) can be avoided. Further, it is preferred to block the inflow of oxygen or the like using gases such as N₂ and Ar. The reason for this is that in the case of blocking the inflow of oxygen, the surface of silicon can be protected from oxidation and silicon can be efficiently reacted with a halogenating agent.

And, it is preferred to remove the organic residue after removing particles having a prescribed particle diameter (for example, 0.1 mm) or larger from the crushed solid fraction. This removal can be done using, for example, a sieve. Generally, a particle having a larger particle diameter contains a larger amount of the organic substance and the organic substance contained in the particle is hard to be removed even in a step of removing the organic residue. Therefore, by removing particles having a prescribed particle diameter or larger in advance, it becomes possible to remove the organic residue effectively and it is possible to reduce the proportion of the organic substance contained in the crushed solid fraction.

### 1-4. Step of reacting the resultant solid fraction with a halogenating agent, and rectifying a product obtained by the reaction to recover halosilane

The halogenating agent is a fluorinating agent, a chlorinating agent, a brominating agent, or an iodinating agent. And, the chlorinating agent is preferably composed of a hydrochloric acid gas or a chlorine gas. The chlorinating agent may be composed of a chloride, for example ammonium chloride. And, a substance that is decomposed into hydrochloric acid or chlorine gas at elevated temperatures can be employed as the chlorinating agent. By reacting the solid fraction obtained by the above-mentioned step with a halogenating agent, a mixture of a halogenated product of an organic substance, a halogenated product of metal and halosilane is obtained. The halosilane is recovered by rectifying this mixture. When the halogenating agent is a fluorinating agent, a chlorinating agent, a brominating agent or an iodinating agent, halosilane to be obtained is fluorosilane, chlorosilane, bromosilane or iodosilane, respectively. And, particularly when the chlorinating agent is a hydrochloric acid gas, chlorosilane is predominantly composed of trichlorosilane and tetrachlorosilane, and when the chlorinating agent is a chlorine gas, chlorosilane is predominantly composed of tetrachlorosilane. In addition, a product obtained by a reaction of the solid fraction with a halogenating agent may be recovered as-is without being rectified.

And, it is preferred to further comprise the steps of neutralizing a residue generated in the step of the paragraph 1-4 and classifying a product obtained by the neutralization to recover the abrasive grains.

The residue generated in the rectification generally contains metal chlorides. The metal chlorides react with water to form hydrochloric acid. Therefore, first, this acid is neutralized. Next, the organic substances remaining in the obtained product are preferably eliminated by being burnt using a kiln or the like. Next, the obtained product is classified and particles having a prescribed particle diameter (for example, 5 µm) or smaller are removed, and then abrasive grains are recovered. Classification can be carried out by, for example, a method in which air is injected in fine particles to blow the fine particles off and the particles are separated by particle size based on the difference in weight and the difference in specific gravity of particles.

### 2. Second embodiment

A method of producing halosilane according to the second embodiment of the present invention comprises the steps of (1) subjecting used slurry to a solid-liquid separation to obtain a solid fraction, followed by performing crushing and organic residue removal with regards to the solid fraction, the used slurry comprising slurry and silicon particles mixed in the slurry, the slurry comprising the abrasive grains and a water-soluble dispersion medium for dispersing the abrasive grains therein and (2) reacting the resultant solid fraction with a halogenating agent, and rectifying a product obtained by the reaction to recover halosilane.

Description of the first embodiment basically holds true for the second embodiment.

In the first embodiment, the used slurry was separated into the solid fraction and the liquid fraction using a combination of a centrifugal separation and distillation, but in the second embodiment, the solid-liquid separation may be performed by a centrifugal separation, filtration or distillation, or may be performed by a combination of these separating operations. Further, the solid-liquid separation may be performed in one or more steps.

### 3. Third embodiment

A method of purifying a solid fraction obtained from the used slurry according to the third embodiment of the present invention comprises the step of subjecting the used slurry to a solid-liquid separation to obtain a solid fraction, followed by performing crushing and organic residue removal with regards to the solid fraction, the used slurry comprising slurry and silicon particles mixed in the slurry, the slurry comprising the abrasive grains and a water-soluble dispersion medium for dispersing the abrasive grains therein.

Description of the first or the second embodiments basically holds true for the third embodiment.

In the third embodiment, it is not necessary to react the solid fraction obtained by removing an organic residue with a halogenating agent and this solid fraction can also be used for other applications. This solid fraction can be used, for example, as materials such as a brick and a tile, or a deoxidizer for steel.

### Example 1

Examples of the present invention will be described. Herein, examples will be described mainly on the silicon for a solar cell. In multi wire saws (MWS) for a solar cell, since a MWS mainly aimed at a production capacity is employed, it becomes possible to process four silicon ingots (125 wide×125 deepx400 long) by one operation in one slicing to produce about 3200 sheets of wafers (125 wide×125 deep×0.3 long). As a slurry tank to be used in the above process, a tank of about 200 liters in size was used, and abrasive grains (specific gravity: 3.21) and a water-soluble dispersion medium (specific gravity: 1.0) were mixed in the mass ratio of 1:1 and this mixture was used as slurry. Specifically, SiC particles having an average particle diameter of 14 µm (No.800) are used as abrasive grains. And, as the dispersion medium, used was a medium formed by mixing propylene glycol and water (in an amount of about 5 to 15%, in order to avoid to become control subjects as a hazardous material under the Fire Defense Law) to form a mixture and adding bentonite (in an amount of about 0.5%) to this mixture. Bentonite is added as a dispersant for dispersing the abrasive grains and Si slicing chippings. A boiling point of propylene glycol, a main component, is about 200°C. In using the slurry for slicing an ingot, a solid substance, such as silicon slicing chippings, of about 20 kg per one slicing is immixed in the slurry.

If this used slurry is repeatedly regenerated and used for slicing using a conventional slurry regeneration system, silicon slicing chippings remain in an amount of about 12% in the used slurry and they remain in an amount of about 6% in the regenerated slurry. As a method of reducing this remaining silicon slicing chippings, a method of discarding about 50 to 70% of a secondary separation solution is adopted in actual. In other words, in a slurry regeneration system of a decanter type, even if about 50 to 70% of a secondary separation solution is discarded, a removal ratio of the silicon slicing chippings is about 50%. It is a reality that in this system, a recovery ratio of the abrasive grains is 90 to 95% and a recovery ratio of the dispersion medium is about 30 to 50%. And, waste discarded from this system includes two species, that is, a portion, which is not used for the regeneration of slurry, of the secondary separation solution and sludge predominantly composed of abrasive grains and silicon chippings. The present Examples were carried out with the main aim of reducing an amount of waste by reusing these two species of waste.

Here, Example 1 will be described referring to Figure 1.
First, used slurry 1 was guided to a primary centrifugal separator, and it was separated into a first solid fraction 3b predominantly composed of abrasive grains and a first liquid fraction 3a predominantly composed of a dispersion medium and slicing chippings (for example, silicon slicing chippings) by subjecting the used slurry to a primary centrifugal separation under the ultra-low centrifugal acceleration of 500 G. The first solid fraction 3b was recovered and used for the regeneration of slurry (recovered abrasive grains 4).

Next, the first liquid fraction 3a was guided to a secondary centrifugal separator, and it was separated into a second liquid fraction 5a predominantly composed of an organic solvent and sludge 5b predominantly composed of slicing chippings (for example, silicon slicing chippings) and abrasive grains by subjecting the first liquid fraction 3a to a secondary centrifugal separation under the centrifugal acceleration of 3500 G. The second liquid fraction 5a was recovered and a part of the recovered liquid fraction was used directly for the regeneration of slurry (a regenerated dispersion medium 6).

The sludge 5b and the second liquid fraction 5a not used for the regeneration of slurry (conventionally, these substances have been discarded as-is) were guided to a vacuum distillation apparatus. In this step, the sludge 5b may be discarded or treated in other step without being sent to the vacuum distillation apparatus and only the second liquid fraction 5a may be sent to the vacuum distillation apparatus. And the entire second liquid fraction 5a may be sent to the vacuum distillation apparatus.

When 500 kg of the used slurry was treated, weights of the sludge 5b and the second liquid fraction 5a to be guided to a vacuum distillation apparatus were 100 kg and 80 kg, respectively. The composition of the sludge 5b and the second liquid fraction 5a are shown in Table 1. In Tables 1 to 6, "%" refers to % by weight.

**Table 1**

| | Conc. of Si | Conc. of SiC | Dispersion medium | Conc. of metal | Others | Production amount |
|---|---|---|---|---|---|---|
| Sludge | 60% | 20% | 20% | 1% | 1% or less | 100 kg |
| Second liquid fraction | 13% | 5% | 80% | 1% | 1% or less | 80 kg |

| | | | | | | |
|---|---|---|---|---|---|---|
| conc. = concentration | | | | | | |

The sludge 5b and the second liquid fraction 5a guided to the vacuum distillation apparatus were mixed and the resulting mixture was separated into a third liquid fraction 7a and a third solid fraction 7b by vacuum distillation (temperature: 160°C, degree of vacuum reached finally: 10 torr). The third liquid fraction 7a was used for the regeneration of slurry after the adjustment of components (a distillation dispersion medium 8). The composition of the third solid fraction 7b is shown in Table 2.

**Table 2**

| | Conc. of Si | Conc. of SiC | Dispersion medium | Conc. of metal | Others | Production amount |
|---|---|---|---|---|---|---|
| Solid fraction | 67% | 22% | 7.4% | 1.8% | 1.8% or less | 98 kg |

| | | | | | | |
|---|---|---|---|---|---|---|
| conc. = concentration | | | | | | |

An amount of Si is 65.7 kg among the above 98 kg.
The third solid fraction 7b obtained by vacuum distillation included particles having a particle diameter of about 1 to 10 mm abundantly. Such particles are formed due to the influence of the dispersion medium contained in the third solid fraction 7b. The dispersion medium is composed of an organic substance (ethylene glycol, propylene glycol or polyethylene glycol) and a substance such as chloroform is produced in reacting the organic substance with hydrochloric acid, and therefore it is better to eliminate the dispersion medium as far as possible. And, it is better that the particles having a particle diameter of about 1 to 10 mm are crushed into finer particles because they have very low reactivity (A reaction takes a long time). And so, vibration vacuum crushing was performed. Alumina balls and a sample of the third solid fraction 7b were charged into a vacuum vessel and vibration vacuum crushing was performed under the conditions of vibration frequency of 2000 vpm, an amplitude of 5 mm, a temperature of 150°C and a vacuum of 1 torr. It took about 2 hours to treat 98 kg of the solid fraction. A particle size distribution of the solid fraction obtained by crushing is shown in Table 3.

**Table 3**

| | 0.001 mm or more | 0.02 mm or more | 0.1 mm or more | 1 mm or more | 10 mm or more |
|---|---|---|---|---|---|
| Before vibration vacuum crushing | 15% | 20% | 28% | 32% | 5% |
| After vibration vacuum crushing | 23% | 68% | 9% | 1% | Nearly 0% |

It is evident from Table 3 that the particles are crushed and a particle diameter becomes smaller. These minutely crushed particles were subjected to vibration vacuum drying to remove the organic residue. An amount of the organic substance remaining before and after the vacuum drying is shown in Table 4. Further, the reason why drying is performed in a vacuum is that if the organic substance makes contact with oxygen at elevated temperatures, the risk of burning of the organic substance is high. And, since a boiling point of the organic substance in a vacuum is lower than that in a normal pressure, drying is performed in a vacuum also for the purpose of saving energy.

**Table 4**

| | Concentration of dispersion medium | Contents of remaining dispersion medium (total 100 weight %) | | |
|---|---|---|---|---|
| | | Organic matters | Water | Others |
| Before vibration vacuum drying | 7.4% | 97% or more | 2% | 1% or less |
| After vibration vacuum drying | 0.2% | 99% or more | Nearly 0% | 1% or less |

It is evident from Table 4 that the concentration of the dispersion medium is significantly decreased. And, it is understood that most of the ingredients of the dispersion medium remaining after the vibration vacuum drying are organic substances.

Next, 35% hydrochloric acid was heated to elevated temperatures (200 to 500°C) to generate a hydrochloric acid gas and this gas was reacted with a solid fraction (hereinafter, referred to as a raw material) subjected to vibration vacuum drying in a fluidized bed. By the above reaction, SiHCl₃ and SiCl₄ were produced. Simultaneously, reaction products (dichloroethylene, dichloropropane, chloroform, etc.) produced from organic substances and chlorinated product of metal elements (FeCl₂, CuCl, CuCl₂, etc.) were produced.

Next, this mixed gas was rectified through the use of the difference between boiling points. A boiling point of SiHCl₃ is about 31.8°C and a boiling point of SiCl₄ is about 58°C, and boiling points of reaction products produced from organic substances are about 60°C (cis-product) and about 48°C (trans-product) for dichloroethylene, about 88°C for dichloropropane, and about 61°C for chloroform, respectively. SiHCl₃ could be relatively easily rectified since there is a large difference between the boiling point of SiHCl₃ and that of other components. On the other hand, since the boiling point of SiCl₄ (about 58°C) is close to that of chloroform or the like, chloroform or the like remained, through in a order of ppm, in SiCl₄ even after rectifying the mixed gas. It was found that it was preferred to decrease the chlorinated product produced from organic substances as far as possible in order to obtain chlorosilane 9 of high purity.

SiHCl₃ can be used for a semiconductor silicon ingot, a polycrystalline silicon ingot for a solar cell, a monocrystalline silicon ingot and the like. SiCl₄ can be used for synthetic quartz glass, a lens for a stepper, optical fiber and the like. It should be noted that a metal component exists as chloride but it has a very high boiling point and a possibility that it is immixed in chlorosilane is low.

### Example 2

The solid fraction 7b obtained by distillation was crushed in the same manner as in Example 1 and then particles having a particle diameter of 0.1 mm or more were removed from the crushed solid fraction 7b using a sieve. A particle size distribution of the crushed solid fraction before and after removing these particles with the sieve are shown in Table 5.

**Table 5**

| | 0.001 mm or more | 0.02 mm or more | 0.1 mm or more | 1 mm or more | 10 mm or more |
|---|---|---|---|---|---|
| After vibration vacuum crushing | 23% | 68% | 9% | 1% | 0% |
| After vibration vacuum crushing and removal with a sieve | 25% | 75% | Nearly 0% | Nearly 0% | Nearly 0% |

It is evident from Table 5 that almost all of particles having a particle diameter of 0.1 mm or more were removed. And, the solid fractions subjected to removal with the sieve were subjected to vibration vacuum drying. The amounts of the dispersion mediums remaining after the vibration vacuum drying were compared between the cases where particles having a particle diameter of 0.1 mm or more were removed with the sieve and were not removed. The results of comparison are shown in Table 6.

**Table 6**

| | Conc. of dispersion medium | Contents of remaining dispersion medium (total 100 weight %) | | |
|---|---|---|---|---|
| | | Organic matters | Water | Others |
| After vibration vacuum drying | 0.2% | 99% or more | Nearly 0% | 1% or less |
| After removal with a sieve and vibration vacuum drying | 1% or less | 99% or more | Nearly 0% | 1% or less |

| | | | | |
|---|---|---|---|---|
| conc. = concentration | | | | |

It is evident from Table 6 that it becomes possible to remove the organic residue effectively by removing of particles having a particle diameter of 0.1 mm or more with a sieve in advance.
By employing this procedure, the amount of the organic substance remaining in SiCl₄ (a boiling point: about 58°C) could be drastically reduced. Ideally, if the solid fraction is crushed so as to be a very fine particle (if the solid fraction does not agglomerate, most of particles inherently have a particle diameter of 20 µm or less), the concentration of organic substances can be further reduced. The reason for this is that the organic substance has a function of causing the particles (Si fine powder and SiC powder) to agglomerate into a bulky particle.

### Example 3

Chlorosilane was produced by following the same procedure as in Example 1 except for using a chlorine gas of 200 to 400°C in place of the hydrochloric acid gas. When the chlorine gas was used, the production of SiCl₄ was completed in a shorter time (time was shortened by about 10 to 50%) than that in the case of using hydrochloric acid

### Example 4

In Example 4, a step of treating a residue generated in the rectifying step of Example 1 was performed in addition to the steps of Example 1. After SiCl₄ or SiHCl₃ was recovered in the rectifying step, a solid residue was generated. There were SiC, chlorides of metal and oxides of metal in the residue. Though there is a method in which a part of chloride is reacted with water to form metal oxide and thereby hydrochloric acid can be reproduced, this was neglected because an amount of metal impurities is small and a large amount of hydrochloric acid cannot be obtained. First, the solid fraction was diluted with equivalent amount of water to enhance its fluidity. Then, acid which is being produced or remains was eliminated by neutralizing the solid fraction. In order to eliminate the organic substances from the semisolid fraction, the semisolid fraction was fired at 600°C using a kiln or the like to burn the organic substances and the like. Since SiC is a very stable material, its quality is not altered by the use of a kiln or the like. Then, a fine powder component was removed by classification and SiC could be obtained. 80% of SiC remaining at the early stage could be recovered.
In addition, this application claims priority to Japanese application serial number 2004-149471, filed on May 19, 2004 which is herein incorporated by reference.

## Claims

1. A method of producing halosilane comprising the steps of (1) subjecting used slurry to a primary centrifugal separation to recover a solid fraction predominantly composed of abrasive grains, the used slurry comprising slurry and silicon particles mixed in the slurry, the slurry comprising the abrasive grains and a water-soluble dispersion medium for dispersing the abrasive grains therein, (2) subjecting a liquid fraction obtained by the primary centrifugal separation to a secondary centrifugal separation to separate into a liquid fraction predominantly composed of the dispersion medium and remaining sludge, (3) distilling the liquid fraction obtained by the secondary centrifugal separation to obtain a solid fraction, followed by performing crushing and organic residue removal with regards to the solid fraction, and (4) reacting the resultant solid fraction with a halogenating agent, and rectifying a product obtained by the reaction to recover halosilane.

2. The method of claim 1, wherein the halogenating agent is a chlorinating agent.

3. The method of claim 1, wherein the chlorinating agent is composed of a hydrochloric acid gas or a chlorine gas.

4. The method of claim 1, wherein the step (3) is a step of distilling a liquid fraction obtained by adding the sludge to a part of the liquid fraction obtained by the secondary centrifugal separation to obtain a solid fraction, followed by performing crushing and organic residue removal with regards to the solid fraction.

5. The method of claim 1, wherein the organic residue removal in the step (3) is performed after removing particles having a prescribed particle diameter or larger from the crushed solid fraction.

6. The method of claim 1, wherein the organic residue removal in the step (3) is performed by vacuum drying.

7. The method of claim 1, further comprising the steps of neutralizing a residue generated in the step (4), and classifying a product obtained by the neutralization to recover the abrasive grains.

8. A method of producing halosilane comprising the steps of (1) subjecting used slurry to a solid-liquid separation to obtain a solid fraction, followed by performing crushing and organic residue removal with regards to the solid fraction, the used slurry comprising slurry and silicon particles mixed in the slurry, the slurry comprising the abrasive grains and a water-soluble dispersion medium for dispersing the abrasive grains therein and (2) reacting the resultant solid fraction with a halogenating agent, and rectifying a product obtained by the reaction to recover halosilane.

9. The method of claim 8, wherein the halogenating agent is a chlorinating agent.

10. The method of claim 8, wherein the chlorinating agent is composed of a hydrochloric acid gas or a chlorine gas.

11. A method of purifying a solid fraction obtained from used slurry comprising the step of subjecting the used slurry to a solid-liquid separation to obtain a solid fraction, followed by performing crushing and organic residue removal with regards to the solid fraction, the used slurry comprising slurry and silicon particles mixed in the slurry, the slurry comprising the abrasive grains and a water-soluble dispersion medium for dispersing the abrasive grains therein.
